# EUROPEAN PATENT APPLICATION

(11) **EP 4 841 652 A1**
(43) Date of publication of application: **18.11.2026**
(21) Application number: 25738523.7
(22) Date of filing: 09.01.2025
(51) Int. Cl.: G21C 17/10, G01T 3/00, G01T 7/00

(54) **NUCLEAR POWER MEASUREMENT VALUE CORRECTION METHOD AND APPARATUS, AND COMPUTER DEVICE AND STORAGE MEDIUM**

(30) Priority: 12.01.2024 CN 202410049075
(71) Applicant: Guangdong Nuclear Power Joint Venture Co. Ltd., Shenzhen, Guangdong 518000 (CN); China Nuclear Power Technology Research Institute Co., Ltd., Shenzhen, Guangdong 518031 (CN)
(72) Inventor: WANG, Xin, Shenzhen, Guangdong 518031 (CN); YANG, Rongrui, Shenzhen, Guangdong 518031 (CN); HE, Mingtao, Shenzhen, Guangdong 518031 (CN); LIN, Jun, Shenzhen, Guangdong 518031 (CN); MENG, Desheng, Shenzhen, Guangdong 518031 (CN); ZHAO, Changyou, Shenzhen, Guangdong 518031 (CN); ZHU, Yuxiang, Shenzhen, Guangdong 518031 (CN); LI, Tongxin, Shenzhen, Guangdong 518031 (CN); LI, Zhijun, Shenzhen, Guangdong 518031 (CN); JIN, Desheng, Shenzhen, Guangdong 518031 (CN); ZHAO, Bingquan, Shenzhen, Guangdong 518031 (CN)
(74) Representative: V.O.
(86) International application number: PCT/CN2025/071573
(87) International publication number: WO 2025/148995

(57) **Abstract**

A nuclear power measurement value correction method and apparatus, and a computer device, a storage medium and a computer program product. The nuclear power measurement value correction method comprises: receiving a nuclear power measurement value and a thermal power measurement value of a nuclear reactor core in real time (S200); when the nuclear reactor core operates to a full-power steady state for the first time, acquiring a first nuclear power measurement value and a first thermal power measurement value of the nuclear reactor core, and when the nuclear reactor core operates to a low-power steady state for the first time, acquiring a second nuclear power measurement value and a second thermal power measurement value of the nuclear reactor core (S400); on the basis of the first nuclear power measurement value, the first thermal power measurement value, the second nuclear power measurement value, and the second thermal power measurement value, determining a correction coefficient (S600); and on the basis of the correction coefficient, correcting a subsequently received nuclear power measurement value, so as to obtain a corrected nuclear power value (S800). Using the nuclear power measurement value correction method can improve the efficiency of correcting a nuclear power measurement value.

## Description

### CROSS-REFERENCE TO RELATED APPLICATION

The present application claims priority to Chinese patent application No. 202410049075.2, entitled "NUCLEAR POWER MEASUREMENT VALUE CORRECTION METHOD AND DEVICE, AND COMPUTER DEVICE AND STORAGE MEDIUM", filed on January 12, 2024, the disclosure of which is hereby incorporated by reference in its entirety.

### TECHNICAL FIELD

The present application relates to the technical field of nuclear reactor ex-core detection, and in particular to a nuclear power measurement value correction method and device, a computer device, a storage medium, and a computer program product.

### BACKGROUND

During the operation phase of a nuclear reactor, the interior of the reactor core is typically a high-temperature, high-pressure, and high-radiation environment. The acquisition of important operating parameters such as the actual operating power of the entire core, is achieved through detectors arranged around the periphery of the core. However, during the actual operation of a nuclear power plant, different power operating conditions may occur depending on various grid loads. Changes in operating conditions may result in variations in the number of core neutrons detected by the ex-core detectors, thus ultimately affecting the counts of the ex-core detectors. Therefore, it is necessary to periodically calibrate the indicated values of the ex-core detectors so that the changes in the indicated values of the ex-core detectors are consistent with the changes in the actual in-core parameter values.

The conventional approach for correcting the nuclear power is relatively cumbersome. Moreover, it is difficult to perform xenon oscillation at the end of the reactor core life of a nuclear reactor, thus resulting in a low correction efficiency of the nuclear power measurement values.

### SUMMARY

Accordingly, it is necessary to provide a nuclear detector calibration method and device, a computer device, a computer-readable storage medium, and a computer program product capable of improving correction efficiency to address the above technical problems.

In a first aspect, the present application provides a nuclear power measurement value correction method. The method includes:
receiving, in real time, a nuclear power measurement value and a thermal power measurement value of a nuclear reactor core;
obtaining a first nuclear power measurement value and a second thermal power measurement value of the nuclear reactor core when the nuclear reactor core initially operates in a full-power steady state, and obtaining a second nuclear power measurement value and a second thermal power measurement value of the nuclear reactor core when the nuclear reactor core initially operates in a low-power steady state;
determining a correction coefficient based on the first nuclear power measurement value, the first thermal power measurement value, the second nuclear power measurement value, and the second thermal power measurement value; and
correcting a subsequently received nuclear power measurement value based on the correction coefficient to obtain a corrected nuclear power value.

In an embodiment, determining the correction coefficient based on the first nuclear power measurement value, the first thermal power measurement value, the second nuclear power measurement value, and the second thermal power measurement value includes:
determining a difference between the second nuclear power measurement value and the first nuclear power measurement value to obtain a nuclear power measurement difference;
determining a difference between the second thermal power measurement value and the first thermal power measurement value to obtain a thermal power measurement difference; and
determining the correction coefficient based on the thermal power measurement difference and the nuclear power measurement difference.

In an embodiment, correcting the subsequently received nuclear power measurement value based on the correction coefficient to obtain the corrected nuclear power value includes:
obtaining a first difference between the nuclear power measurement value and the first nuclear power measurement value;
determining a second difference between the nuclear power measurement value and the first nuclear power measurement value based on the first difference and the correction coefficient, wherein the second difference is obtained by correcting the first difference; and
obtaining the corrected nuclear power value based on the second difference and the first thermal power measurement value.

In an embodiment, the method further includes: updating the correction coefficient according to a preset correction coefficient update condition.

In an embodiment, updating the correction coefficient according to the preset correction coefficient update condition includes:
obtaining an operating duration of the nuclear reactor; and
updating the correction coefficient when the operating duration is greater than a preset duration threshold.

In a second aspect, the present application further provides a nuclear power measurement value correction device. The device includes:
a real-time power receiving module configured to receive, in real time, a nuclear power measurement value and a thermal power measurement value of a nuclear reactor core;
a measurement value acquisition module configured to obtain a first nuclear power measurement value and a second thermal power measurement value of the nuclear reactor core when the nuclear reactor core initially operates in a full-power steady state, and obtain a second nuclear power measurement value and a second thermal power measurement value of the nuclear reactor core when the nuclear reactor core initially operates in a low-power steady state;
a correction coefficient determination module configured to determine a correction coefficient based on the first nuclear power measurement value, the first thermal power measurement value, the second nuclear power measurement value, and the second thermal power measurement value; and
a measurement value correction module configured to correct a subsequently received nuclear power measurement value based on the correction coefficient to obtain a corrected nuclear power value.

In an embodiment, the correction coefficient determination module is further configured to: determine a difference between the second nuclear power measurement value and the first nuclear power measurement value to obtain a nuclear power measurement difference; determine a difference between the second thermal power measurement value and the first thermal power measurement value to obtain a thermal power measurement difference; and determine the correction coefficient based on the thermal power measurement difference and the nuclear power measurement difference.

In a third aspect, the present application further provides a computer device. The computer device includes a memory and a processor. The memory has a computer program stored thereon. The processor, when executing the computer program, performs steps of the method according to any one of the above embodiments of the nuclear power measurement value correction method.

In a fourth aspect, the present application further provides a computer-readable storage medium. The computer-readable storage medium has a computer program stored thereon. The computer program, when executed by a processor, performs steps of the method according to any one of the above embodiments of the nuclear power measurement value correction method.

In a fifth aspect, the present application further provides a computer program product. The computer program product includes a computer program. The computer program, when executed by a processor, causes the processor to perform steps of the method according to any one of the above embodiments of the nuclear power measurement value correction method.

In the above nuclear power measurement value correction method and device, the computer device, the storage medium, and the computer program product, the nuclear power measurement value and the thermal power measurement value of a nuclear reactor core are received in real time, the first nuclear power measurement value and the first thermal power measurement value of the nuclear reactor core are obtained when the nuclear reactor core initially operates in a full-power steady state, and the second nuclear power measurement value and the second thermal power measurement value of the nuclear reactor core are obtained when the nuclear reactor core initially operates in a low-power steady state. Then, the correction coefficient is determined based on the first nuclear power measurement value, the first thermal power measurement value, the second nuclear power measurement value, and the second thermal power measurement value. Subsequently, the subsequently received nuclear power measurement value is corrected based on the correction coefficient to obtain a more accurate corrected nuclear power value. It can be seen that the present solution involves acquiring only the nuclear power measurement values and the thermal power measurement values under the initial full-power steady state and the initial low-power steady state to determine the correction coefficient. Compared with conventional correction methods, the process of determining the correction coefficient in the present solution is simplified and does not require complex and tedious theoretical calculations, making the nuclear power correction process simplified and more efficient, thereby improving the correction efficiency.

### BRIEF DESCRIPTION OF THE DRAWINGS

To illustrate the technical solutions in the embodiments of the present application or in the conventional art more clearly, the accompanying drawings required for use in the description of the embodiments or the conventional art are briefly introduced below. Obviously, the accompanying drawings in the following description are merely embodiments of the present application, and for those of ordinary skill in the art, other drawings may be obtained based on the disclosed drawings without creative efforts.
FIG. 1 is a diagram showing an application scenario of a nuclear power measurement value correction method according to an embodiment;
FIG. 2 is a schematic flowchart of the nuclear power measurement value correction method according to an embodiment;
FIG. 3 is a schematic flowchart of the nuclear power measurement value correction method according to another embodiment;
FIG. 4 is a schematic flowchart of the nuclear power measurement value correction method according to yet another embodiment;
FIG. 5 is a schematic flowchart of the nuclear power measurement value correction method according to still another embodiment;
FIG. 6 is a schematic flowchart of the nuclear power measurement value correction method according to a further embodiment;
FIG. 7 is a block diagram showing a structure of a nuclear power measurement value correction device according to an embodiment;
FIG. 8 is a block diagram showing the structure of the nuclear power measurement value correction device according to another embodiment; and
FIG. 9 is a diagram showing an internal structure of a computer device according to an embodiment.

### DETAILED DESCRIPTION OF THE EMBODIMENTS

The technical solutions in the embodiments of the present application will be clearly and completely described below with reference to the accompanying drawings in the embodiments of the present application. Obviously, the described embodiments are merely some, rather than all, of the embodiments of the present application. All other embodiments obtained by those of ordinary skill in the art based on the embodiments of the present application without creative efforts shall fall within the scope of protection of the present application.

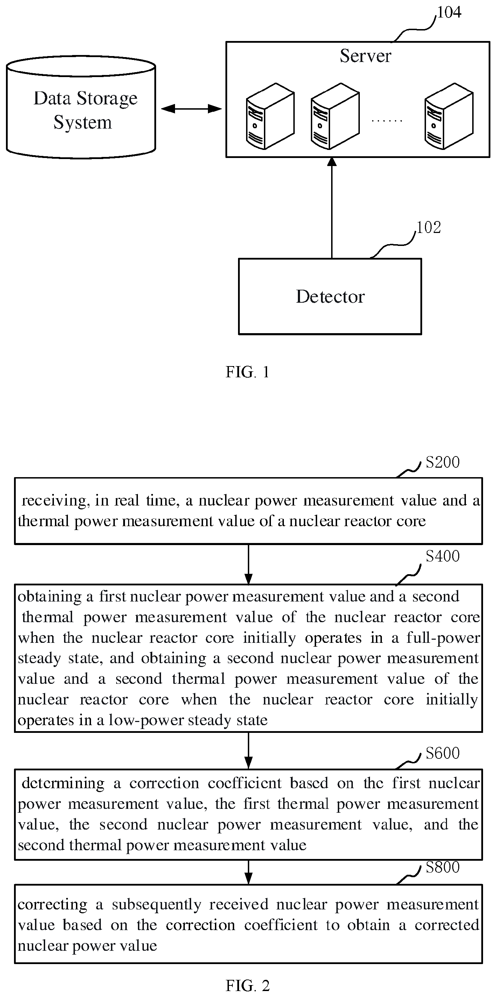

A nuclear power measurement value correction method provided by embodiments of the present application can be applied to an application scenario as shown in FIG. 1. A detector 102 is connected to a server 104, and a data storage system may store data to be processed by the server 104. The data storage system can be integrated on the server 104, or may be deployed in the cloud or on other network servers.

Specifically, the detector 102 may detect a nuclear power and a thermal power of a nuclear reactor core in real time, and upload the detected nuclear power and thermal power to the server 104 in real time. The server 104 obtains a first nuclear power measurement value and a first thermal power measurement value of the nuclear reactor core at an initial full-power steady state, and obtains a second nuclear power measurement value and a second thermal power measurement value of the nuclear reactor core at an initial low-power steady state. Then, the server 104 determines a correction coefficient based on the first nuclear power measurement value, the first thermal power measurement value, the second nuclear power measurement value, and the second thermal power measurement value. Further, the server 104 corrects a subsequently received nuclear power measurement value based on the correction coefficient, so as to obtain a more accurate corrected nuclear power value. It can be understood that the nuclear power measurement value correction method provided by the embodiments of the present application can also be applied to a terminal, or to a system including a terminal and a server.

The detector 102 may be, but is not limited to, any one of various nuclear reactor ex-core detectors. The server 104 may be implemented as an independent server or a server cluster composed of multiple servers.

In an embodiment, as shown in FIG. 2, a nuclear power measurement value correction method is provided. The method is described using an example of the method applied to the server 104 in FIG. 1, and includes the following steps:
In Step S200, a nuclear power measurement value and a thermal power measurement value of a nuclear reactor core are received in real time.

During the operation of a nuclear reactor, nuclear power and thermal power are two critical parameters. Nuclear power refers to the nuclear energy released per unit time by the nuclear fuel in the reactor core. That is, the atomic nuclei in the nuclear fuel undergo nuclear fission or nuclear fusion, generating neutrons and releasing energy, and the nuclear power is used to describe a release rate of this energy. Thermal power refers to a rate at which the nuclear energy is ultimately transferred to the reactor coolant in the form of thermal energy.

Specifically, the nuclear power measurement value and the thermal power measurement value of the nuclear reactor core can be detected directly or indirectly by ex-core detectors or other power measuring devices. The ex-core detectors or other power measuring devices can feed back the nuclear power measurement value and the thermal power measurement value to a corresponding server or terminal in real time for subsequent correction processing. Alternatively, these values can also be displayed in real time on an instrument panel in a control room for technical personnel to view at any time.

In a specific implementation, the ex-core detectors may be installed around the nuclear reactor. The ex-core detectors can measure the nuclear power and thermal power of the nuclear reactor core in real time, and report the measured nuclear power measurement value and thermal power measurement value to the server in real time. The server receives the nuclear power measurement value and the thermal power measurement value of the nuclear reactor core reported in real time by the ex-core detectors.

In Step S400, a first nuclear power measurement value and a second thermal power measurement value of the nuclear reactor core are obtained when the nuclear reactor core initially operates in a full-power steady state, and a second nuclear power measurement value and a second thermal power measurement value of the nuclear reactor core are obtained when the nuclear reactor core initially operates in a low-power steady state.

The full-power refers to the state in which the operating power of the nuclear reactor reaches its rated power, that is, under normal operation of components such as nuclear fuel and a cooling system, the nuclear reaction is carried out at a rated rate, thereby reaching the rated power of the nuclear reactor. The low-power steady state refers to a state in which the nuclear reactor is operating in a non-full-power steady state, for example, at 80% of full power, 60% of full power, etc. During the operation of the nuclear reactor, a steady state refers to a situation in which the operating state of the nuclear reactor remains relatively unchanged over a certain period of time. In a steady state, various key parameters of the nuclear reactor, such as nuclear power, temperature, and pressure, tend to be stable.

Based on the nuclear power measurement values and thermal power measurement values uploaded in real time by the ex-core detectors or other power measuring devices, the first nuclear power measurement value and the first thermal power measurement value of the nuclear reactor core at the initial full-power steady state, as well as the second nuclear power measurement value and the second thermal power measurement value of the nuclear reactor core at the initial low-power steady state, can be directly acquired. It should be noted that when the nuclear reactor core initially operates in the full-power steady state, it can be considered that the nuclear power and thermal power collected by the ex-core detectors or other power measuring devices at this time can accurately reflect the operating conditions inside the nuclear reactor core. Similarly, when the nuclear reactor core initially operates in the low-power steady state, it can also be considered that the nuclear power and thermal power collected by the ex-core detectors or other power measuring devices at this time can accurately reflect the operating conditions inside the nuclear reactor core. For this reason, the nuclear power measurement values of the nuclear reactor core under other operating conditions can be corrected based on the first nuclear power measurement value, the first thermal power measurement value, the second nuclear power measurement value, and the second thermal power measurement value collected under the above two conditions.

In Step S600, a correction coefficient is determined based on the first nuclear power measurement value, the first thermal power measurement value, the second nuclear power measurement value, and the second thermal power measurement value.

The correction coefficient is used to correct the value indicated by the ex-core detector, so that the indicated value of the ex-core detector can accurately reflect the actual operating state inside the nuclear reactor core.

Due to changes in the operating state of the nuclear reactor core and other objective reasons, in most cases, the indicated value of the ex-core detector cannot accurately reflect the actual operating state of the nuclear reactor core. Therefore, in most cases, the real-time nuclear power measurement values are uncorrected values that need to be corrected through subsequent steps. Research has found that the reasons for the deviation between the indicated value of the ex-core detector and the actual operating state inside the core may include the response sensitivity of the detector, burnup effects, the influence of water temperature, etc. Considering that the reasons for the deviation are different, the corresponding correction methods are also different.

In the embodiment, the main consideration is the deviation between the nuclear power and the thermal power indicated by the ex-core detector. Therefore, the correction coefficient can be determined based on the first nuclear power measurement value, the second nuclear power measurement value, the first thermal power measurement value, and the first thermal power measurement value obtained in the above steps. Exemplarily, a linear regression method may be used to determine a functional relationship between the nuclear power and the thermal power, and the correction coefficient is further determined.

In Step S800, a subsequently received nuclear power measurement value is corrected based on the correction coefficient to obtain a corrected nuclear power value.

Based on the correction coefficient, the subsequently received nuclear power measurement value is corrected. This correction process can make the nuclear power measurement value more accurately reflect the actual operating state of the nuclear reactor, thereby obtaining a corrected nuclear power value. The corrected nuclear power value can be used for subsequent analysis of the operating conditions and performance of the nuclear reactor.

According to the above nuclear power measurement value correction method, the nuclear power measurement value and the thermal power measurement value of a nuclear reactor core are received in real time, the first nuclear power measurement value and the first thermal power measurement value of the nuclear reactor core are obtained when the nuclear reactor core initially operates in a full-power steady state, and the second nuclear power measurement value and the second thermal power measurement value of the nuclear reactor core are obtained when the nuclear reactor core initially operates in a low-power steady state. Then, the correction coefficient is determined based on the first nuclear power measurement value, the first thermal power measurement value, the second nuclear power measurement value, and the second thermal power measurement value. Subsequently, the subsequently received nuclear power measurement values are corrected based on the correction coefficient to obtain the corrected nuclear power values. It can be seen that the present solution involves acquiring only the nuclear power measurement values and the thermal power measurement values at the initial full-power steady state and the initial low-power steady state to determine the correction coefficient. Compared with the relatively complicated process of determining the correction coefficient in conventional correction methods, the present solution is simplified and does not require complex and tedious theoretical calculations, making the nuclear power correction process simplified and more efficient, thereby improving the correction efficiency.

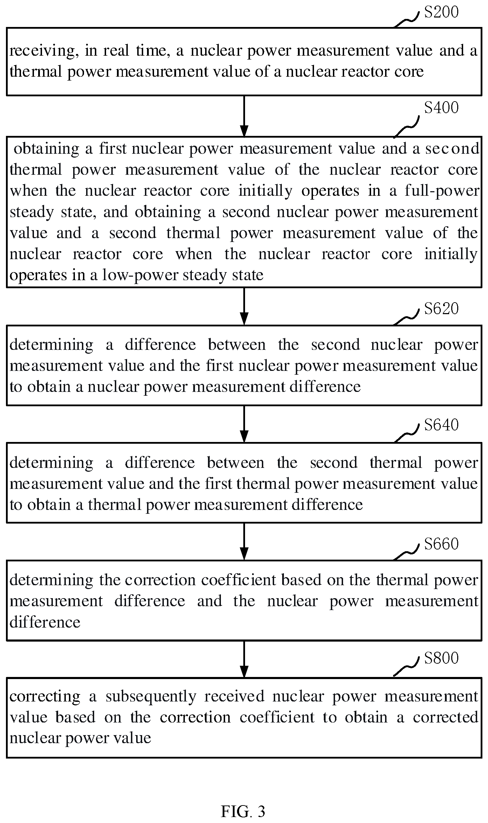

In an embodiment, as shown in FIG. 3, step S600 includes steps of:
S620, determining a difference between the second nuclear power measurement value and the first nuclear power measurement value to obtain a nuclear power measurement difference;
S640, determining a difference between the second thermal power measurement value and the first thermal power measurement value to obtain a thermal power measurement difference; and
S660, determining the correction coefficient based on the thermal power measurement difference and the nuclear power measurement difference.

In the process of determining the correction coefficient, both the operating condition of the nuclear reactor at the initial full-power steady state and the operating condition of the nuclear reactor at the initial low-power steady state are taken into account. Specifically, it is required to determine the difference between the second nuclear power measurement value and the first nuclear power measurement value, as well as the difference between the second thermal power measurement value and the first thermal power measurement value, and the correction coefficient is determined based on the thermal power measurement difference and the nuclear power measurement difference. The formula may be as follows: $K = \frac{{W}_{2} - {W}_{1}}{{P}_{2} - {P}_{1}}$

Where K represents the correction coefficient, W₂ represents the second thermal power measurement value, W₁ represents the first thermal power measurement value, P₂ represents the second nuclear power measurement value, and P₁ represents the first nuclear power measurement value.

In the embodiment, the nuclear power measurement difference is obtained by determining the difference between the second nuclear power measurement value and the first nuclear power measurement value, and the thermal power measurement difference is obtained by determining the difference between the second thermal power measurement value and the first thermal power measurement value; then, the correction coefficient is determined based on the thermal power measurement difference and the nuclear power measurement difference. Since both the nuclear power and the thermal power of the nuclear reactor under different states are taken into account in the process of determining the correction coefficient, the deviation between the nuclear power and the thermal power can be effectively corrected, thereby making the indicated values of the ex-core detector closer to the actual operating conditions inside the nuclear reactor core.

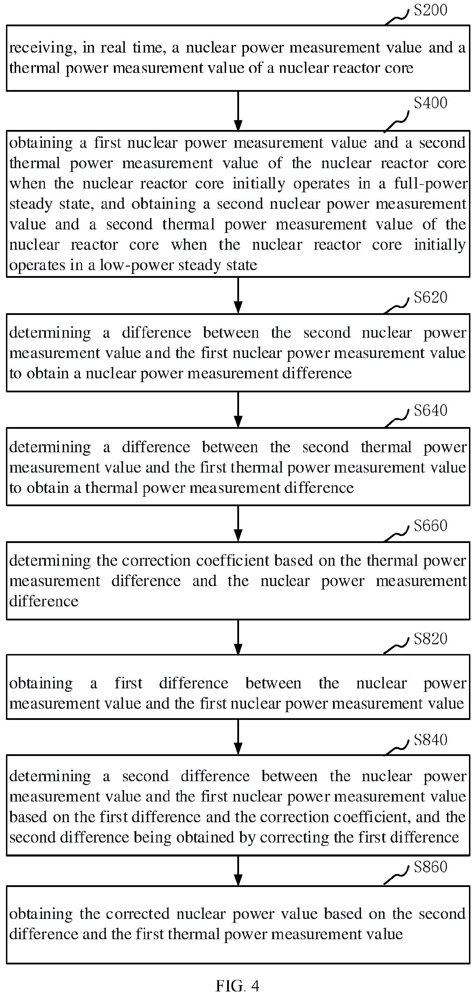

In an embodiment, as shown in FIG. 4, S800 includes steps of:
S820, obtaining a first difference between the nuclear power measurement value and the first nuclear power measurement value;
S840, determining a second difference between the nuclear power measurement value and the first nuclear power measurement value based on the first difference and the correction coefficient, and the second difference being obtained by correcting the first difference; and
S860, obtaining the corrected nuclear power value based on the second difference and the first thermal power measurement value.

Continuing from the above embodiment, after the correction coefficient is determined, the correction coefficient is applied to correct the indicated value of the ex-core detector. Specifically, a nuclear power measurement value subsequently detected by the ex-core detector may be obtained, and a first difference between the nuclear power measurement value and the first nuclear power measurement value may be determined, and the correction coefficient may be used to correct the first difference to obtain a second difference. Further, the corrected nuclear power value is determined based on the second difference and the first thermal power measurement value. The specific formula is: ${P}_{r} = K \left(P-{P}_{1}\right) + {W}_{1}$ where Pᵣ represents the corrected nuclear power value, P represents the nuclear power measurement value, P₁ represents the first nuclear power measurement value, and W₁ represents the first thermal power measurement value.

The above correction method is applicable to multiple stages of the nuclear reactor, including a low-power operation state and a subsequent return to a full-power operation state. When the nuclear reactor subsequently returns to the full-power operation state, the nuclear power measurement value at this time is substantially equal to the first nuclear power measurement value. In other words, the correction amount is sufficiently small to be negligible. Therefore, the indicated value of the ex-core detector at this time can be regarded as a reasonably accurate reflection of the operating state inside the nuclear reactor core.

In the embodiment, the first difference between the nuclear power measurement value and the first nuclear power measurement value is obtained, and then the second difference between the nuclear power measurement value and the first nuclear power measurement value is determined based on the first difference and the correction coefficient. The second difference is a value obtained by correcting the first difference, and the corrected real-time nuclear power value is obtained based on the second difference and the first thermal power measurement value. The entire correction process improves the real-time monitoring accuracy of the nuclear power, and allows correction of the nuclear power measurement values at multiple stages of the nuclear reactor, which is beneficial to ensure that the corrected nuclear power measurement values accurately reflect the operating state of the nuclear reactor core.

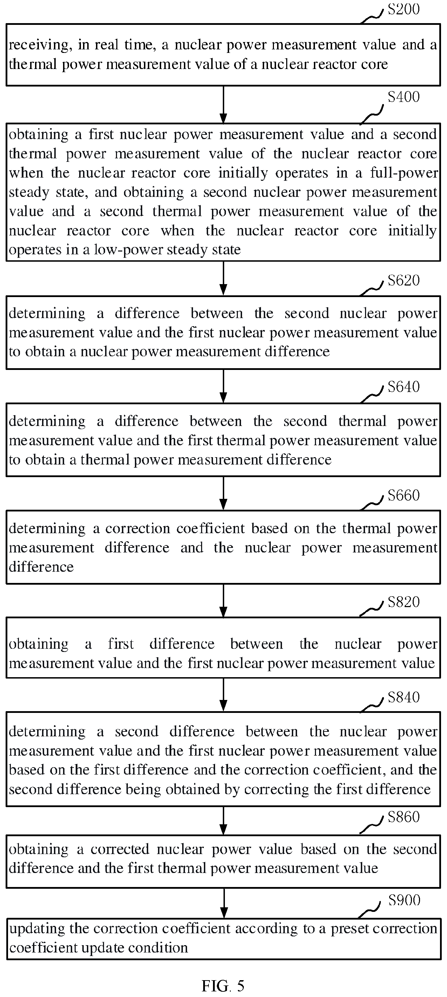

In an embodiment, as shown in FIG. 5, the nuclear power measurement value correction method further includes step of:
S900, updating the correction coefficient according to a preset correction coefficient update condition.

The criteria for updating the correction coefficient are related to the specific nuclear reactor system. The correction coefficient is updated to adapt to and reflect changes in the operating state of the system, so as to improve correction accuracy.

Exemplarily, if the structure or operating conditions of the nuclear reactor change significantly, it is indicated that the correction coefficient needs to be updated to adapt to the new operating conditions. The performance of the nuclear reactor may be monitored periodically, and if a deviation in the operating state of the nuclear reactor is detected, the correction coefficient needs to be updated. The correction coefficient may be updated by using the latest operating data to re-determine the correction coefficient in accordance with any of the correction coefficient determination methods described in the above embodiments. In addition, a statistical method, such as regression analysis, may also be used to continually fit and update the correction coefficient, so that the correction coefficient can be better adapted to the current operating state of the nuclear reactor.

In the embodiment, the correction coefficient is updated according to the preset correction coefficient update condition, which can improve the adaptability of the correction coefficient to different operating conditions of the nuclear reactor, thereby improving the efficiency and accuracy of the correction process.

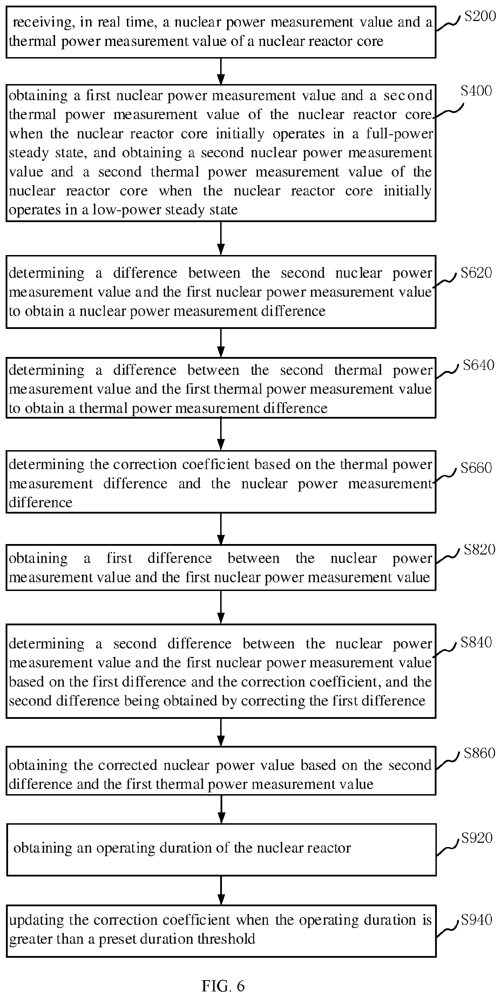

In an embodiment, as shown in FIG. 6, S900 includes steps of:
S920, obtaining an operating duration of the nuclear reactor; and
S940, updating the correction coefficient when the operating duration is greater than a preset duration threshold.

The operating duration of the nuclear reactor is one of the criteria used to determine whether the correction coefficient needs to be updated. The operating duration of the nuclear reactor may refer to the total operating time elapsed from the startup of the nuclear reactor to the current time. The operating duration of the nuclear reactor is obtained, and a duration threshold is preset. When the operating duration is greater than the preset duration threshold, the correction coefficient is updated. For example, the duration threshold may be set to 7 days. Within this duration threshold, it can be considered that the performance of the nuclear reactor core changes relatively little over operating time, and the correction coefficient remains applicable, so there is no need to update the correction coefficient. When the operating duration of the nuclear reactor is greater than or equal to 7 days, the performance of the nuclear reactor may have changed, thus rendering the correction coefficient no longer applicable to the current state of the nuclear reactor, and requiring an update of the correction coefficient.

The above operation is performed for the reason that the performance of the nuclear reactor may change over time, such as burnup effects, equipment aging, etc., which may render the original correction coefficient no longer applicable to the current state of the nuclear reactor, that is, the correction of the indicated value of the ex-core detector is no longer accurate, and thus the correction coefficient needs to be updated. In this embodiment, by obtaining the operating duration of the nuclear reactor and updating the correction coefficient when the operating duration is greater than the preset duration threshold, the correction coefficient can be adapted to changes in the long-term operation of the nuclear reactor, thereby improving the effectiveness of the correction coefficient, and improving the efficiency and accuracy of the correction process.

To more clearly describe the nuclear power measurement value correction method provided by the present application, a specific embodiment of the method is described with reference to FIG. 6. This specific embodiment includes the following steps of:
S200, receiving, in real time, a nuclear power measurement value and a thermal power measurement value of a nuclear reactor core;
S400, obtaining a first nuclear power measurement value and a second thermal power measurement value of the nuclear reactor core when the nuclear reactor core initially operates in a full-power steady state, and obtaining a second nuclear power measurement value and a second thermal power measurement value of the nuclear reactor core when the nuclear reactor core initially operates in a low-power steady state;
S620, determining a difference between the second nuclear power measurement value and the first nuclear power measurement value to obtain a nuclear power measurement difference;
S640, determining a difference between the second thermal power measurement value and the first thermal power measurement value to obtain a thermal power measurement difference;
S660, determining a correction coefficient based on the thermal power measurement difference and the nuclear power measurement difference;
S820, obtaining a first difference between the nuclear power measurement value and the first nuclear power measurement value;
S840, determining a second difference between the nuclear power measurement value and the first nuclear power measurement value based on the first difference and the correction coefficient, and the second difference being obtained by correcting the first difference;
S860, obtaining a corrected nuclear power value based on the second difference and the first thermal power measurement value;
S920, obtaining an operating duration of the nuclear reactor;
S940, updating the correction coefficient when the operating duration is greater than a preset duration threshold.

It should be understood that although various steps in the flowcharts involved in the above embodiments are sequentially displayed as indicated by arrows, these steps are not necessarily executed sequentially in the order indicated by the arrows. Unless explicitly stated herein, the execution of these steps is not strictly limited in order, and these steps may be executed in other orders. Moreover, at least a portion of the steps in the flowcharts involved in the above embodiments may include multiple steps or multiple stages. These steps or stages are not necessarily executed and completed at the same time, but may be executed at different times. The execution order of these steps or stages is not necessarily sequential, but may be performed sequentially or alternately with other steps or with at least a portion of the steps or stages of other steps.

Based on the same inventive concept, embodiments of the present application further provide a nuclear power measurement value correction device for implementing the nuclear power measurement value correction method above. The implementation solution provided by the device for solving the problem is similar to the implementation solution described in the above method. Therefore, for specific limitations of one or more embodiments of the nuclear power measurement value correction device provided below, reference may be made to the limitations of the nuclear power measurement value correction method above, which are not repeatedly described herein.

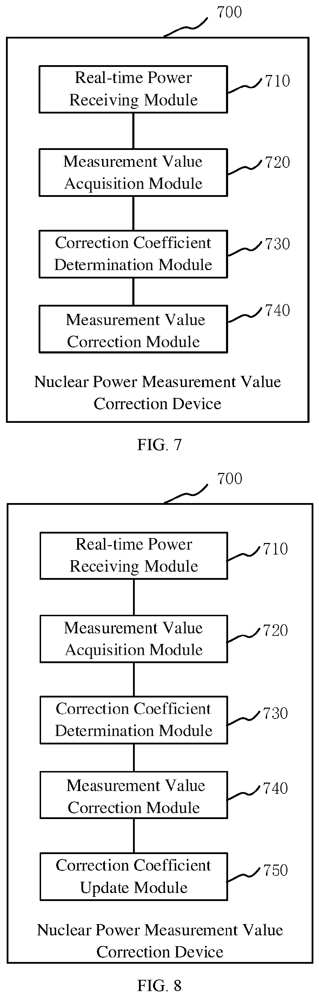

In an embodiment, as shown in FIG. 7, a nuclear power measurement value correction device 700 is provided, including: a real-time power receiving module 710, a measurement value acquisition module 720, a correction coefficient determination module 730, and a measurement value correction module 740.

The real-time power receiving module 710 is configured to receive, in real time, a nuclear power measurement value and a thermal power measurement value of a nuclear reactor core.

The measurement value acquisition module 720 is configured to obtain a first nuclear power measurement value and a second thermal power measurement value of the nuclear reactor core when the nuclear reactor core initially operates in a full-power steady state, and to obtain a second nuclear power measurement value and a second thermal power measurement value of the nuclear reactor core when the nuclear reactor core initially operates in a low-power steady state.

The correction coefficient determination module 730 is configured to determine a correction coefficient based on the first nuclear power measurement value, the first thermal power measurement value, the second nuclear power measurement value, and the second thermal power measurement value.

The measurement value correction module 740 is configured to correct a subsequently received nuclear power measurement value based on the correction coefficient to obtain a corrected nuclear power value.

In an embodiment, the correction coefficient determination module 730 is further configured to determine a difference between the second nuclear power measurement value and the first nuclear power measurement value to obtain a nuclear power measurement difference, determine a difference between the second thermal power measurement value and the first thermal power measurement value to obtain a thermal power measurement difference, and determine the correction coefficient based on the thermal power measurement difference and the nuclear power measurement difference.

In an embodiment, the correction coefficient determination module 730 is further configured to: obtain a pre-established functional relationship, wherein the functional relationship defines the correction coefficient as a ratio of the thermal power measurement difference to the nuclear power measurement difference; and determine the correction coefficient based on the functional relationship, the thermal power measurement difference, and the nuclear power measurement difference.

In an embodiment, the measurement value correction module 740 is further configured to: acquire a first difference between the nuclear power measurement value and the first nuclear power measurement value; determine a second difference between the nuclear power measurement value and the first nuclear power measurement value based on the first difference and the correction coefficient, wherein the second difference is obtained by correcting the first difference; and obtain the corrected nuclear power value based on the second difference and the first thermal power measurement value.

In an embodiment, as shown in FIG. 8, the nuclear power measurement value correction device 700 further includes a correction coefficient update module 750. The correction coefficient update module 750 is configured to update the correction coefficient according to a preset correction coefficient update condition.

In an embodiment, the correction coefficient update module 750 is further configured to obtain an operating duration of the nuclear reactor, and update the correction coefficient when the operating duration is greater than a preset duration threshold.

Each module in the above nuclear power measurement value correction device may be implemented in whole or in part by software, hardware, or a combination thereof. Each of the above modules may be embedded in or independent of a processor of a computer device in the form of hardware, or may be stored in a memory of the computer device in the form of software, so as to facilitate the processor calling and executing operations corresponding to each of the above modules.

In an embodiment, a computer device is provided. The computer device may be a server, and an internal structure thereof may be as shown in FIG. 8. The computer device includes a processor, a memory, an input/output interface (I/O for short), and a communication interface. The processor, the memory, and the input/output interface are connected via a system bus, and the communication interface is connected to the system bus via the input/output interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for the operation of the operating system and the computer program in the non-volatile storage medium. The database of the computer device is configured to store data such as real-time nuclear power measurement values and correction coefficients. The input/output interface of the computer device is configured for exchanging information between the processor and external devices. The communication interface of the computer device is configured for communicating with external terminals through a network connection. The computer program, when is executed by the processor, performs a nuclear power measurement value correction method.

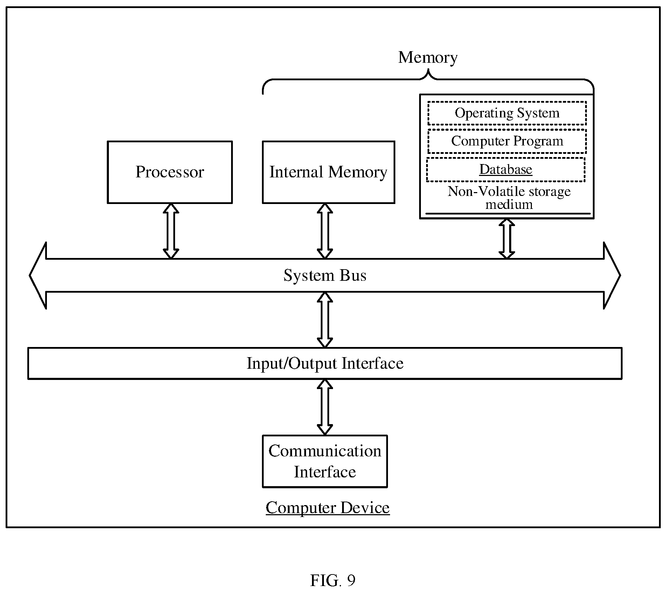

Those skilled in the art will appreciate that the structure shown in FIG. 9 is merely partial structure related to the solution of the present application shown by a block diagram, and does not constitute a limitation on the computer device to which the solution of the present application is applied. A specific computer device may include more or fewer components than those shown in the figure, or combine certain components, or have a different arrangement of components.

In an embodiment, a computer device is provided, including a memory and a processor. The memory has a computer program stored thereon, and the processor, when executing the computer program, performs the steps of the method according to any one of the above embodiments of the nuclear power measurement value correction method.

In an embodiment, a computer-readable storage medium is provided, having a computer program stored thereon. The computer program, when executed by a processor, performs the steps of any one of the above embodiments of the nuclear power measurement value correction method.

In an embodiment, a computer program product is provided, including a computer program. The computer program, when executed by a processor, causes the processor to perform the steps of any one of the above embodiments of the nuclear power measurement value correction method.

It should be noted that user information (including but not limited to user device information, user personal information, etc.) and data (including but not limited to data used for analysis, stored data, displayed data, etc.) involved in the present application are all information and data that have been authorized by the user or fully authorized by all parties, and the collection, use, and processing of relevant data must comply with the relevant laws, regulations, and standards of the relevant countries and regions.

A person of ordinary skill in the art can understand that all or some of procedures of the method in the foregoing embodiments can be implemented by a computer program instructing relevant hardware. The computer program can be stored in a non-volatile computer readable storage medium. When the computer program is executed, the procedures of the foregoing method embodiments can be implemented. References to the memory, the database, or other medium used in the embodiments provided in the present application can all include at least one of a non-volatile or a volatile memory. The non-volatile memory can include a read-only memory (ROM), a magnetic tape, a floppy disk, a flash memory, an optical memory, a high-density embedded non-volatile memory, a resistive random-access memory (ReRAM), a magnetoresistive random access memory (MRAM), a ferroelectric random-access memory (FRAM), a phase change memory (PCM), a graphene memory, or the like. The volatile memory can include a random-access memory (RAM) or an external cache. As an illustration and not a limitation, the RAM can be in various forms, such as a static random-access memory (SRAM) or a dynamic random-access memory (DRAM). The database involved in the various embodiments provided in the present application can include at least one of a relational database and a non-relational database. The non-relational database can include a blockchain-based distributed database or the like, but is not limited thereto. The processors involved in the various embodiments provided by the present application can be general-purpose processors, central processing units, graphics processors, digital signal processors, programmable logic devices, data processing logic devices based on quantum computing, and are not limited thereto.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements belong to the protection scope of the present application. Therefore, the scope of protection of the patent application should be subject to the appended claims.

## Claims

1. A nuclear power measurement value correction method, wherein the method comprises:
receiving, in real time, a nuclear power measurement value and a thermal power measurement value of a nuclear reactor core;
obtaining a first nuclear power measurement value and a second thermal power measurement value of the nuclear reactor core when the nuclear reactor core initially operates in a full-power steady state, and obtaining a second nuclear power measurement value and a second thermal power measurement value of the nuclear reactor core when the nuclear reactor core initially operates in a low-power steady state;
determining a correction coefficient based on the first nuclear power measurement value, the first thermal power measurement value, the second nuclear power measurement value, and the second thermal power measurement value; and
correcting a subsequently received nuclear power measurement value based on the correction coefficient to obtain a corrected nuclear power value.

2. The method according to claim 1, wherein determining the correction coefficient based on the first nuclear power measurement value, the first thermal power measurement value, the second nuclear power measurement value, and the second thermal power measurement value, comprises:
determining a difference between the second nuclear power measurement value and the first nuclear power measurement value to obtain a nuclear power measurement difference;
determining a difference between the second thermal power measurement value and the first thermal power measurement value to obtain a thermal power measurement difference; and
determining the correction coefficient based on the thermal power measurement difference and the nuclear power measurement difference.

3. The method according to claim 2, wherein determining the correction coefficient based on the thermal power measurement difference and the nuclear power measurement difference comprises:
obtaining a pre-established functional relationship, wherein the functional relationship defines the correction coefficient as a ratio of the thermal power measurement difference to the nuclear power measurement difference; and
determining the correction coefficient based on the functional relationship, the thermal power measurement difference, and the nuclear power measurement difference.

4. The method according to claim 1, wherein correcting the subsequently received nuclear power measurement value based on the correction coefficient to obtain the corrected nuclear power value comprises:
obtaining a first difference between the nuclear power measurement value and the first nuclear power measurement value;
determining a second difference between the nuclear power measurement value and the first nuclear power measurement value based on the first difference and the correction coefficient, wherein the second difference is obtained by correcting the first difference; and
obtaining the corrected nuclear power value based on the second difference and the first thermal power measurement value.

5. The method according to any one of claims 1 to 4, wherein the method further comprises: updating the correction coefficient according to a preset correction coefficient update condition.

6. The method according to claim 5, wherein updating the correction coefficient according to the preset correction coefficient update condition comprises:
obtaining an operating duration of the nuclear reactor; and
updating the correction coefficient when the operating duration is greater than a preset duration threshold.

7. A nuclear power measurement value correction device, wherein the device comprises:
a real-time power receiving module configured to receive, in real time, a nuclear power measurement value and a thermal power measurement value of a nuclear reactor core;
a measurement value acquisition module configured to: obtain a first nuclear power measurement value and a second thermal power measurement value of the nuclear reactor core when the nuclear reactor core initially operates in a full-power steady state; and obtain a second nuclear power measurement value and a second thermal power measurement value of the nuclear reactor core when the nuclear reactor core initially operates in a low-power steady state;
a correction coefficient determination module configured to determine a correction coefficient based on the first nuclear power measurement value, the first thermal power measurement value, the second nuclear power measurement value, and the second thermal power measurement value; and
a measurement value correction module configured to correct a subsequently received nuclear power measurement value based on the correction coefficient to obtain a corrected nuclear power value.

8. The device according to claim 7, wherein the correction coefficient determination module is further configured to: determine a difference between the second nuclear power measurement value and the first nuclear power measurement value to obtain a nuclear power measurement difference; determine a difference between the second thermal power measurement value and the first thermal power measurement value to obtain a thermal power measurement difference; and determine the correction coefficient based on the thermal power measurement difference and the nuclear power measurement difference.

9. The device according to claim 8, wherein the correction coefficient determination module is further configured to: obtain a pre-established functional relationship, wherein the functional relationship defines the correction coefficient as a ratio of the thermal power measurement difference to the nuclear power measurement difference; and determine the correction coefficient based on the functional relationship, the thermal power measurement difference, and the nuclear power measurement difference.

10. The device according to claim 7, wherein the measurement value correction module is further configured to: obtain a first difference between the nuclear power measurement value and the first nuclear power measurement value; determine a second difference between the nuclear power measurement value and the first nuclear power measurement value based on the first difference and the correction coefficient, wherein the second difference is obtained by correcting the first difference; and obtain the corrected nuclear power value based on the second difference and the first thermal power measurement value.

11. The device according to any one of claims 7 to 10, wherein the device further comprises a correction coefficient update module configured to update the correction coefficient according to a preset correction coefficient update condition.

12. The device according to claim 11, wherein the correction coefficient update module is further configured to obtain an operating duration of the nuclear reactor, and update the correction coefficient when the operating duration is greater than a preset duration threshold.

13. A computer device, comprising a memory and a processor, wherein the memory has a computer program stored thereon, and the processor, when executing the computer program, performs steps of the method according to any one of claims 1 to 6.

14. A computer-readable storage medium, having a computer program stored thereon, wherein the computer program, when executed by a processor, performs steps of the method according to any one of claims 1 to 6.

15. A computer program product, comprising a computer program, wherein the computer program, when executed by a processor, causes the processor to perform steps of the method according to any one of claims 1 to 6.
